# FASCICULE DE BREVET EUROPEEN

(11) **EP 3 495 986 B1**
(45) Date de publication et mention de la délivrance du brevet: **05.05.2021**
(21) Numéro de dépôt: 18208403.8
(22) Date de dépôt: 26.11.2018
(51) Int. Cl.: G06K 7/10, H04B 5/00, H04B 5/02, H04W 52/02

(54) **DÉTECTION D'UN DISPOSITIF NFC**
DETEKTION EINER NFC-VORRICHTUNG
NFC DEVICE DETECTION

(30) Priorité: 07.12.2017 FR 1761798
(43) Date de publication de la demande: 12.06.2019
(73) Titulaire: STMICROELECTRONICS (ROUSSET) SAS, 13790 Rousset (FR)
(72) Inventeur: TRAMONI, Alexandre, 83330 LE BEAUSSET (FR); CORDIER, Nicolas, 13080 LUYNES (FR); TORNAMBE, Anthony, 13790 ROUSSET (FR)
(74) Mandataire: Cabinet Beaumont

(56) Documents cités:
- EP-A1- 3 173 968
- WO-A1-03/052672

## Description

### Domaine

La présente description concerne de façon générale les circuits électroniques et, plus particulièrement, les transpondeurs électromagnétiques ou étiquettes électroniques (TAG). La présente description s'applique plus particulièrement aux dispositifs électroniques intégrant un circuit de communication en champ proche (NFC - Near Field Communication) et à la détection de la présence d'un tel dispositif dans le champ d'un autre dispositif.

### État de l'art antérieur

Les systèmes de communication à transpondeurs électromagnétiques sont de plus en plus fréquents, en particulier depuis le développement des technologies de communication en champ proche (NFC - Near Field Communication).

Ces systèmes exploitent un champ électromagnétique radiofréquence généré par un dispositif (terminal ou lecteur) pour communiquer avec un autre dispositif (carte).

Dans les systèmes récents, un même dispositif NFC peut opérer en mode carte ou en mode lecteur (par exemple dans le cas d'une communication en champ proche entre deux téléphones mobiles). Il est alors fréquent que les dispositifs soient alimentés par batteries et que leurs fonctions et circuits soient mis en veille pour ne pas consommer d'énergie entre des périodes d'utilisation. Les dispositifs doivent alors être « réveillés » quand ils se trouvent à portée l'un de l'autre.

Le document WO03/052672 décrit un lecteur de circuit intégré sans contact comprenant un mode de veille active à faible consommation électrique.

### Résumé

Un mode de réalisation réduit tout ou partie des inconvénients des techniques connues de détection de présence d'un dispositif électronique intégrant un circuit de communication en champ proche par un autre dispositif électronique émettant un champ électromagnétique, plus particulièrement pendant les périodes de veille.

Un mode de réalisation propose une solution évitant les erreurs de détection.

Un mode de réalisation propose une solution résistant à des variations de conditions environnementales.

Ainsi, la présente invention concerne un procédé de détection de présence selon la revendication 1.

Selon un mode de réalisation, les seuils définissent une fenêtre d'amplitude du signal aux bornes du circuit oscillant du premier dispositif.

Selon un mode de réalisation, les seuils définissent une fenêtre de phase du signal aux bornes du circuit oscillant du premier dispositif.

Selon un mode de réalisation, une fenêtre utilisée pour une salve courante est définie par des niveaux mesurés lors d'au moins une salve précédente en l'absence de détection.

Selon un mode de réalisation, une fenêtre utilisée pour une salve courante est définie par une moyenne glissante de niveaux mesurés lors de plusieurs salves précédentes.

Selon un mode de réalisation, le premier dispositif comporte au moins deux modes de fonctionnement dont un premier mode dans lequel des salves de détection sont espacées d'une durée correspondant à au moins cent fois la durée des salves.

Selon un mode de réalisation, le dispositif bascule dans un mode de fonctionnement d'émission d'une séquence d'interrogation telle que définie dans la norme NFC Forum lorsque le deuxième dispositif est détecté à portée.

L'invention concerne aussi un dispositif de communication en champ proche selon la revendication 8.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique et sous forme de blocs d'un exemple de système à communication en champ proche du type auquel s'appliquent, à titre d'exemple, des modes de réalisation qui vont être décrits ;
la figure 2 illustre, par un chronogramme, un exemple de processus de détection, par un dispositif en mode lecteur en veille, d'un dispositif en mode carte ;
la figure 3 représente, sous forme de schéma-blocs, un mode de mise en oeuvre d'un procédé d'adaptation de seuils de sortie d'un mode veille ; et
la figure 4 illustre le fonctionnement du procédé décrit en relation avec la figure 3.

### Description détaillée

De mêmes éléments ont été désignés par de mêmes références aux différentes figures.

Par souci de clarté, seules les étapes et éléments utiles à la compréhension des modes de réalisation qui vont être décrits ont été représentés et seront détaillés. En particulier, la génération des signaux radiofréquences et leur interprétation n'ont pas été détaillées, les modes de réalisation décrits étant compatibles avec les techniques usuelles de génération et d'interprétation de ces signaux.

Sauf précision contraire, lorsque l'on fait référence à deux éléments connectés entre eux, cela signifie directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

Dans la description qui suit, lorsque l'on fait référence aux termes « approximativement », « environ » et « de l'ordre de », cela signifie à 10 % près, de préférence à 5 % près.

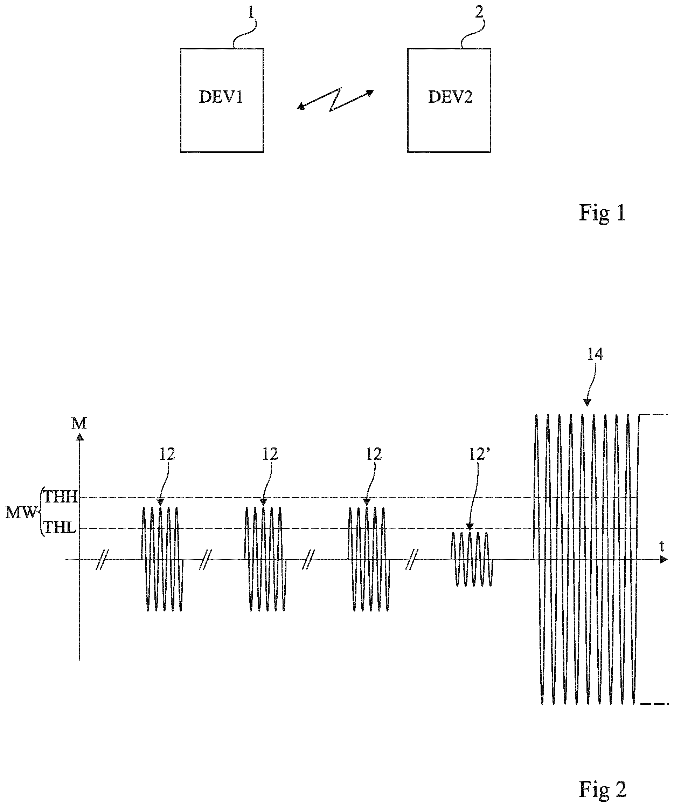

La figure 1 est une représentation très schématique et sous forme de blocs d'un exemple de système de communication en champ proche du type auquel s'appliquent, à titre d'exemple, des modes de réalisation qui vont être décrits.

On suppose le cas de deux dispositifs électroniques similaires, par exemple deux téléphones mobiles, mais tout ce qui va être décrit s'applique plus généralement à tout système dans lequel un transpondeur capte un champ électromagnétique rayonné par un lecteur, borne ou terminal. Pour simplifier, on fera référence à des dispositifs NFC pour designer des dispositifs électroniques intégrant des circuits de communication en champ proche.

Deux dispositifs NFC 1 (DEV1) et 2 (DEV2) sont susceptibles de communiquer par couplage électromagnétique en champ proche. Selon les applications, pour une communication, un des dispositifs fonctionne en mode dit lecteur tandis que l'autre fonctionne en mode dit carte, ou les deux dispositifs communiquent en mode poste à poste (peer to peer - P2P). Chaque dispositif comporte divers circuits électroniques de génération d'un signal radiofréquence émis à l'aide d'une antenne. Le champ radiofréquence généré par l'un des dispositifs est capté par l'autre dispositif qui se trouve à portée et qui comporte également une antenne.

Lorsqu'un dispositif (par exemple le dispositif 1) émet un champ électromagnétique pour initier une communication avec un autre dispositif NFC (par exemple le dispositif 2), ce champ est capté par ce dispositif 2 dès qu'il se trouve à portée. Le couplage entre les deux circuits oscillants (celui de l'antenne du dispositif 2 et de celle du dispositif 1) se traduit par une variation de la charge constituée par les circuits du dispositif 2 sur le circuit oscillant de génération du champ du dispositif 1. En pratique, la variation correspondante de phase ou d'amplitude du champ émis est détectée par le dispositif 1 qui entame alors un protocole de communication NFC avec le dispositif 2. Côté dispositif 1, on détecte en pratique si l'amplitude de la tension aux bornes du circuit oscillant et/ou le déphasage par rapport au signal généré par le circuit 1 sortent des fenêtres d'amplitude et de phase définies chacune par un seuil inférieur et un seuil supérieur.

Une fois que le dispositif 1 a détecté la présence du dispositif 2 dans son champ, il entame une procédure d'établissement de communication, mettant en oeuvre des émissions de requêtes par le dispositif 1 et de réponses par le dispositif 2 (séquence d'interrogation telle que définie dans la norme NFC Forum). Les circuits du dispositif 2, s'ils sont en veille, sont alors réactivés.

Dans les applications plus particulièrement visées par la présente description, lorsqu'un dispositif NFC n'est pas en cours de communication, il est commuté en mode dit basse consommation (Low Power) afin de réduire l'énergie consommée. Cela est en particulier le cas pour les dispositifs alimentés par batteries. Dans ce mode basse consommation, un dispositif configuré en mode lecteur exécute un mode dit de détection de carte (Tag detection ou Card detection) et exécute des boucles de détection. La détection est similaire à celle opérée lorsque le dispositif n'est pas en mode basse consommation, mais la différence est que, en mode normal, l'émission de la porteuse est continue et inclut périodiquement des trames d'interrogation alors que, pour réduire la consommation, l'émission du champ s'effectue par salves (burst) périodiques et sans trame d'interrogation lorsque le dispositif est en mode basse consommation. Les salves sont d'une durée nettement inférieure (dans un rapport d'au moins dix, de préférence d'au moins cent) au champ émis en mode normal pour une requête d'interrogation d'une carte.

La figure 2 illustre, par un chronogramme, un exemple de processus de détection, par un dispositif en mode lecteur en veille, d'un dispositif en mode carte.

La figure 2 illustre de façon très schématique un exemple d'allure de l'amplitude M du signal aux bornes du circuit oscillant du dispositif opérant en mode lecteur.

Lorsqu'il est en mode basse consommation, un dispositif NFC qui cherche à détecter la présence d'autres dispositifs à portée émet périodiquement une salve (burst) de champ 12. Cette salve de détection ne comporte généralement que la porteuse, typiquement à 13,56 MHz, sans modulation et est de durée relativement courte par rapport à l'intervalle entre deux salves, de préférence dans un rapport d'au moins 100. L'intervalle entre deux salves dépend des dispositifs mais est généralement de quelques centaines de millisecondes (typiquement 256 ms) tandis que la durée d'une salve 12 est de l'ordre de la dizaine ou centaine de microsecondes. Quand un dispositif se trouve dans le champ et modifie la charge du circuit oscillant du dispositif émetteur, cela se traduit par une variation d'amplitude et/ou de phase du signal aux bornes du circuit oscillant lors d'une salve correspondante 12'. Si cette variation est suffisante pour sortir d'une fenêtre d'amplitude MW définie par un seuil inférieur THL et un seuil supérieur THH, le dispositif émetteur bascule en mode actif, c'est-à-dire qu'il quitte le mode basse consommation, et émet alors normalement (émission 14).

Le cas échéant, le dispositif 1 sort du mode veille temporairement et périodiquement pour émettre les salves 12. Toutefois, on préfère utiliser une machine d'état pour l'émission de salves en mode basse consommation, ce qui évite de devoir réveiller un microcontrôleur du dispositif et permet ainsi de rester en mode veille.

En pratique, une carte est considérée détectée lors d'une salve de détection 12 si l'amplitude et/ou la phase sortent de fenêtres définies chacune par deux seuils représentant respectivement une plage d'amplitudes et une plage de phases à l'intérieur de laquelle on considère qu'on est à vide (sans carte en présence). Dans l'exemple de la figure 2, on suppose que la présence d'une carte se traduit par une baisse d'amplitude (salve 12'). Toutefois, la présence d'une carte peut selon les conditions également se traduire par une augmentation de l'amplitude. Il en est de même pour le déphasage par rapport au signal émis.

Lorsqu'une carte est détectée et que le dispositif émetteur est activé, il se met à émettre le champ avec des trames 14 d'interrogation (polling) d'une communication. Ces trames sont normalisées (norme NFC Forum) et sont fonction des protocoles de communication supportés par le lecteur. Le dispositif récepteur (en mode carte) répond à la requête du protocole qu'il supporte et la communication démarre. La durée d'émission d'une trame est généralement de l'ordre de quelques millisecondes à quelques dizaines de millisecondes.

Lorsque la communication est terminée ou lorsque le dispositif récepteur sort du champ, le dispositif émetteur repasse en mode basse consommation au bout d'un certain temps (de l'ordre de la seconde) afin de réduire sa consommation. Il se remet alors à émettre périodiquement des salves de détection sans requête de communication.

Une difficulté réside dans le fait que la détection par le dispositif émetteur d'une variation de l'amplitude du champ ou de sa phase peut être perturbée par différents facteurs environnementaux (objets métalliques à proximité, température, etc.). Cela peut conduire soit à de fausses détections, soit à des absences de détection.

Pour tenter de pallier ce problème, les solutions actuelles consistent à adapter les seuils (calibration) avant que le dispositif commute en mode basse consommation. Une telle calibration des seuils consiste à émettre une salve de porteuse et à mesurer le signal aux bornes du circuit oscillant pour déterminer un niveau « à vide ». Le seuil de détection est alors adapté par rapport à cette situation à vide.

Toutefois, ces solutions s'avèrent insatisfaisantes. D'une part, des éléments perturbateurs peuvent interférer avec le champ émis et engendrer de fausses détections ou masquer des dispositifs présents dans le champ. D'autre part, la calibration est effectuée à chaud, c'est-à-dire à un moment où les circuits électroniques du dispositif sortent d'un mode actif dans lequel ils ont consommé et sont donc à une température relativement élevée par rapport à la température ambiante représentant leur température au repos. Cette détermination des seuils à chaud nuit à la fiabilité du système de détection.

On pourrait penser attendre le refroidissement des circuits pour effectuer la calibration. Cependant, cela engendre une période longue (plusieurs secondes, voire plusieurs minutes) avant de pouvoir effectuer la calibration et, pendant tout ce temps, la détection du mode basse consommation ne fonctionne pas. De surcroit, cela ne règlerait pas la présence d'autres perturbations environnementales

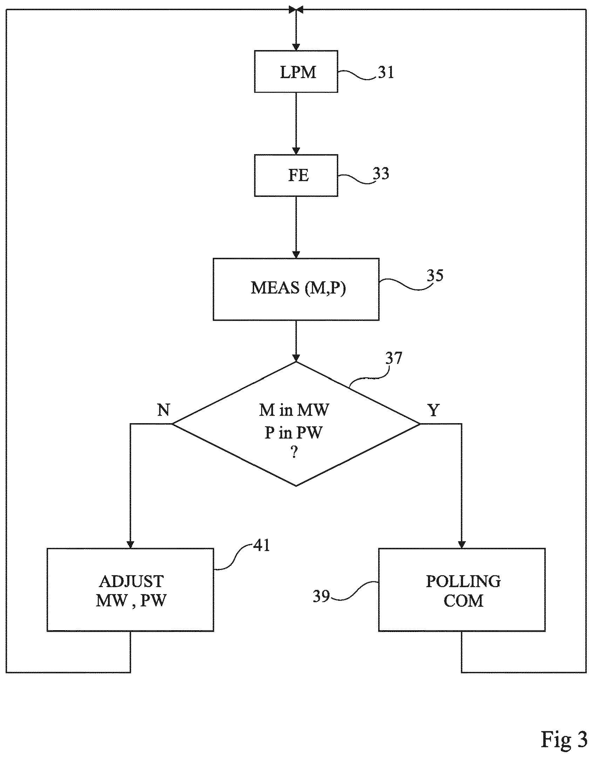

La figure 3 représente, sous forme de schéma-blocs, un mode de mise en oeuvre d'un procédé d'adaptation de seuils de sortie d'un mode veille, ce qui revient à un procédé de détection de présence d'un dispositif NFC dans le champ d'un dispositif émetteur.

Selon ce mode de réalisation, on prévoit d'ajuster périodiquement les seuils de détection. De préférence, cet ajustement est effectué à chaque salve de détection. En d'autres termes, le processus de calibration habituellement effectué avant de passer en mode basse consommation est exécuté à chaque salve de détection. En effet, une salve de détection correspond à l'émission d'un champ pendant une courte durée (de l'ordre de la dizaine ou centaine de microsecondes). Il est alors possible de mesurer l'amplitude et la phase afin d'adapter les seuils de détection.

On considère le cas d'un dispositif NFC (par exemple DEV1, figure 1) qui, lorsqu'il est en mode basse consommation (bloc 31, LPM), émet périodiquement (par exemple toutes les 256 ms) un champ pendant une durée relativement courte (de l'ordre d'une dizaine à quelques centaines de microsecondes) par rapport à la durée entre deux salves 12 de champ, afin de détecter la présence d'un autre dispositif NFC à portée. Selon la manière dont sont mises en oeuvre les salves (microcontrôleur ou machine d'état), le dispositif sort du mode veille pendant l'émission d'une salve pour y retourner immédiatement après ou reste en mode veille tant qu'un dispositif n'est pas détecté. On suppose, en figure 3, le cas où le dispositif DEV1 reste en mode veille.

Pour chaque salve 12, le dispositif DEV1 émet un champ (bloc 33, FE) à la fréquence de résonance du système et mesure (bloc 35, MEAS (M, P)) l'amplitude M et la phase P du signal aux bornes de son circuit oscillant (non représenté).

En supposant qu'un deuxième dispositif (DEV2, figure 1) est à portée, sa simple présence (le couplage entre les deux antennes) engendre une variation d'amplitude et de phase côté dispositif 1. Si cette variation est suffisante pour que l'un des seuils de détection en amplitude THM ou l'un des seuils de détection en phase THP soit atteint, c'est-à-dire que l'amplitude ou la phase mesurée sorte de la fenêtre MW ou PW (sortie Y du bloc 37, M in MW, P in PW ?), on valide la détection.

Le dispositif 1 quitte alors le mode basse consommation pour initier une communication (bloc 39, POLLING COM). Ce basculement peut s'effectuer directement à la suite de la salve de détection ou, comme illustré par la figure 2, après un intervalle de temps (faible devant l'intervalle de temps entre deux salves 12).

Dans le cas contraire (sortie N du bloc 37), c'est-à-dire si le signal reste dans les fenêtres MW et PW correspondant au fonctionnement à vide, la salve de détection s'arrête.

Toutefois, selon le mode de réalisation décrit, les seuils d'amplitude et de phase sont mis à jour (bloc 41, ADJUST MW, PW) en fonction de valeurs M et P mesurées pendant la salve courante de détection afin de servir de seuils pour la salve suivante. Ainsi, chaque salve de détection sert non seulement à la détection mais également à l'adaptation des seuils de détection pour la ou les salves suivantes. Les seuils ajustés sont stockés et le dispositif continue sa surveillance (revient au bloc 31).

En pratique, dans le cas d'une machine d'état, celle-ci se met dans un mode d'attente ou inactif pendant une temporisation correspondant à l'intervalle entre deux salves.

En cas de communication (bloc 39), on revient à un mode basse consommation (bloc 31) une fois la communication terminée.

En variante, l'adaptation des seuils n'est pas effectuée à chaque salve de détection mais avec une certaine périodicité de salve, par exemple toutes les 2 salves ou toutes les 4 salves. Toutefois, la calibration est de préférence effectuée à chaque salve car cela donne une détection plus fiable.

Selon un mode de réalisation, les seuils mémorisés sont simplement remplacés par les nouveaux seuils mesurés à chaque salve et les nouveaux seuils sont utilisés pour la salve suivante.

Selon un autre mode de réalisation, on effectue une moyenne glissante sur un nombre de mesures compris entre, par exemple 5 et 20, de préférence de l'ordre de 10. Initialement (lors du passage en mode basse consommation), le nombre de seuils pris en compte dans la moyenne est plus faible (par exemple il débute à un et croit au fur et à mesure des mesures jusqu'à 10).

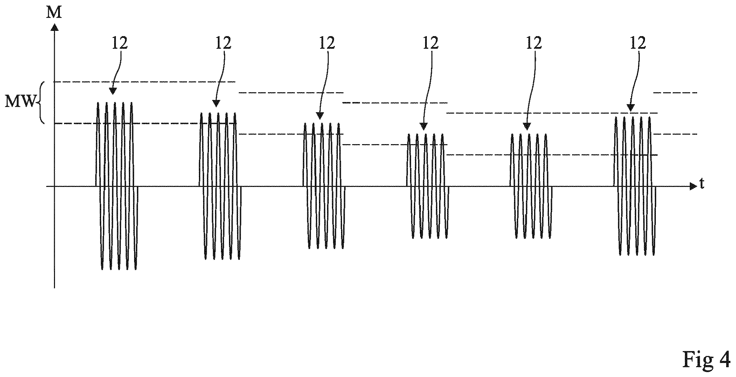

La figure 4 illustre, par un chronogramme d'amplitude à rapprocher du chronogramme de la figure 2, le fonctionnement du procédé décrit en relation avec la figure 3.

Au début, la calibration (à chaud) fournit des seuils identiques à la solution de la figure 2 (l'échelle n'est pas respectée par rapport à la figure 2). Toutefois, ces seuils diminuent progressivement au fur et à mesure que les circuits électroniques du dispositif refroidissent. Par conséquent, une carte qui ne serait pas détectée avec la solution usuelle est ici détectée et, à l'inverse, on évite une fausse détection qui n'est due qu'au refroidissement du dispositif. De plus, les seuils peuvent le cas échéant réaugmenter (plus généralement varier) en présence d'autres éléments perturbateurs dans l'environnement du dispositif (par exemple, une main, un objet métallique, etc.) comme l'illustre la partie droite de la figure 4.

Un avantage des modes de réalisation décrits est qu'il est désormais possible d'utiliser efficacement une détection automatique de sortie de mode basse consommation par détection de présence d'un dispositif en mode carte dans le champ.

Un autre avantage est que les solutions décrites engendrent une consommation supplémentaire négligeable, qui se limite à la mémorisation du seuil à chaque salve avec, le cas échéant, un calcul de moyenne. En particulier, la mesure elle-même n'engendre pas de consommation supplémentaire dans la mesure où on tire profit de la mesure effectuée pour la détection.

Un autre avantage des modes de réalisation décrits est qu'ils ne modifient pas les protocoles de communication entre les dispositifs. Ainsi, les solutions décrites sont compatibles avec les systèmes usuels.

Un autre avantage est que la mise en oeuvre des modes de réalisation décrits est compatible avec une mise en oeuvre logicielle. Ainsi, selon un mode de réalisation, la mise en oeuvre des modes de réalisation décrits utilise les fonctions matérielles existantes des dispositifs existants et ne requiert qu'une mise à jour logicielle afin d'intégrer les étapes du procédé d'ajustement des seuils de détection. Toutefois, selon un mode de réalisation préféré évitant de sortir temporairement du mode basse consommation à chaque salve, on prévoit une mise en oeuvre par une solution matérielle, par exemple par une machine d'état (en logique câblée). Cela permet généralement une exécution plus rapide et de moindre consommation.

Divers modes de réalisation ont été décrits. Diverses modifications apparaîtront à l'homme de l'art. En particulier, le choix de la durée d'émission du champ à chaque salve de détection et l'intervalle entre deux salves peuvent varier d'une application à une autre. De plus, la détermination de l'amplitude des fenêtres de détection (l'intervalle entre les deux seuils de définition de la fenêtre d'amplitude et l'intervalle entre les deux seuils de définition de la fenêtre de phase) dépend de l'application et peut varier. En outre, la mise en oeuvre pratique des modes de réalisation qui ont été décrits est à la portée de l'homme du métier à partir des indications fonctionnelles données ci-dessus.

## Revendications

1. Procédé de détection de présence, par un premier dispositif NFC (1), d'un deuxième dispositif NFC (2), au cours de salves (12) périodiques d'émission de champ (33) émises par le premier dispositif NFC, dans lequel des seuils de détection de présence (THH, THL) sont ajustés (41) en fonction de résultats de mesures d'amplitude et de phase d'un signal aux bornes d'un circuit oscillant du premier dispositif NFC, obtenus au cours d'une ou plusieurs salves précédentes de fonctionnement à vide, un fonctionnement à vide correspondant à un fonctionnement dans lequel lesdits résultats de mesures restent entre les seuils de détection de présence.

2. Procédé selon la revendication 1, dans lequel les seuils (THH, THL) définissent une fenêtre (MW) d'amplitude du signal aux bornes du circuit oscillant du premier dispositif (1).

3. Procédé selon la revendication 1 ou 2, dans lequel les seuils définissent une fenêtre de phase du signal aux bornes du circuit oscillant du premier dispositif (1).

4. Procédé selon l'une quelconque des revendications 1 à 3, dans lequel une fenêtre (MW) utilisée pour une salve courante (12) est définie par des niveaux (M) mesurés lors d'au moins une salve précédente en l'absence de détection.

5. Procédé selon l'une quelconque des revendications 1 à 4, dans lequel une fenêtre (MW) utilisée pour une salve courante (12) est définie par une moyenne glissante de niveaux mesurés lors de plusieurs salves précédentes.

6. Procédé selon l'une quelconque des revendications 1 à 5, dans lequel le premier dispositif (1) comporte au moins deux modes de fonctionnement dont un premier mode dans lequel des salves de détection (12) sont espacées d'une durée correspondant à au moins cent fois la durée des salves.

7. Procédé selon la revendication 6, dans lequel le dispositif (1) bascule dans un mode de fonctionnement d'émission d'une séquence d'interrogation telle que définie dans la norme NFC Forum lorsque le deuxième dispositif (2) est détecté à portée.

8. Dispositif de communication en champ proche (1, 2), adapté à la mise en oeuvre du procédé selon l'une quelconque des revendications 1 à 7, le dispositif de communication en champ proche étant le premier dispositif NFC.

## Patentansprüche

1. Verfahren zur Erfassung der Anwesenheit einer zweiten NFC-Vorrichtung (2) durch eine erste NFC-Vorrichtung (1) während periodischer Bursts (12) der Emission eines Feldes (33) durch die erste NFC-Vorrichtung, wobei Anwesenheitserkennungsschwellenwerte (THH, THL) als Funktion von Ergebnissen von Amplituden-und Phasenmessungen eines Signals zwischen Anschlüssen eines Schwingkreises der ersten NFC-Vorrichtung angepasst (41) werden, die während eines oder mehrerer vorhergehender Bursts während eines unbelasteten Betriebsmodus erhalten wurden, wobei ein unbelasteter Betriebsmodus einem Betriebsmodus entspricht, in dem die Messergebnisse zwischen den Anwesenheitserkennungsschwellenwerten bleiben.

2. Verfahren nach Anspruch 1, wobei die Schwellenwerte (THH, THL) ein Amplitudenfenster (MW) eines Signals über einen Schwingkreis der ersten Vorrichtung (1) definieren.

3. Verfahren nach Anspruch 1 oder 2, wobei die Schwellenwerte ein Phasenfenster eines Signals über einen Schwingkreis der ersten Vorrichtung (1) definieren.

4. Verfahren nach einem der Ansprüche 1 bis 3, wobei ein für einen aktuellen Burst (12) verwendetes Fenster (MW) durch Pegel (M) definiert ist, die während mindestens eines vorhergehenden Bursts in Abwesenheit einer Erfassung gemessen wurden.

5. Verfahren nach einem der Ansprüche 1 bis 4, wobei ein für einen aktuellen Burst (12) verwendetes Fenster (MW) durch einen gleitenden Mittelwert von Pegeln definiert ist, die während einer Vielzahl von vorherigen Bursts gemessen wurden.

6. Verfahren nach einem der Ansprüche 1 bis 5, wobei die erste Vorrichtung (1) mindestens zwei Betriebsarten aufweist, darunter eine erste Betriebsart, bei der Erfassungsbursts (12) um eine Dauer voneinander beabstandet sind, die mindestens dem Hundertfachen der Dauer der Bursts entspricht.

7. Verfahren nach Anspruch 6, wobei die Vorrichtung (1) in einen Betriebsmodus der Aussendung einer Abrufsequenz, wie sie im NFC-Forum-Standard definiert ist, umschaltet, wenn die zweite Vorrichtung (2) in ihrer Reichweite erfasst wird.

8. Nahfeldkommunikationsgerät (1, 2), das in der Lage ist, das Verfahren nach einem der Ansprüche 1 bis 7 durchzuführen, wobei das Nahfeldkommunikationsgerät das erste NFC-Gerät ist.

## Claims

1. A method of detection of the presence, by a first NFC device (1), of a second NFC device (2), during periodic bursts (12) of emission of a field (33) by the first NFC device, wherein detection thresholds (THH, THL) are adjusted (41) according to results of amplitude and phase measurements of a signal between terminals of an oscillating circuit of the first NFC device, obtained during one or a plurality of previous bursts during unloaded operating mode, an unloaded operating mode corresponding to an operating mode in which said measurement results stay between the presence detection thresholds.

2. The method of claim 1, wherein the thresholds (THH, THL) define an amplitude window (MW) of a signal across an oscillating circuit of the first device (1).

3. The method of claim 1 or 2, wherein the thresholds define a phase window of a signal across an oscillating circuit of the first device (1).

4. The method of any of claims 1 to 3, wherein a window (MW) used for a current burst (12) is defined by levels (M) measured during at least one previous burst in the absence of a detection.

5. The method of any of claims 1 to 4, wherein a window (MW) used for a current burst (12) is defined by a sliding average of levels measured during a plurality of previous bursts.

6. The method of any of claims 1 to 5, wherein the first device (1) comprises at least two operating modes, among which a first mode where detection bursts (12) are spaced apart by a duration corresponding to at least one hundred times the duration of the bursts.

7. The method of claim 6, wherein the device (1) switches to an operating mode of emission of a polling sequence such as defined in the NFC Forum standard when the second device (2) is detected within its range.

8. A near-field communication device (1, 2), capable of implementing the method of any of claims 1 to 7, the near-field communication device being the first NFC device.
